# EUROPEAN PATENT APPLICATION

(11) **EP 0 603 446 A1**
(43) Date of publication of application: **29.06.1994**
(21) Application number: 92600009.2
(22) Date of filing: 02.12.1992
(51) Int. Cl.: C07C 1/00, C10J 3/10, C10J 3/06

(54) **Allothermal method for the gasification of solid fuels in a rotary kiln**

(71) Applicant: PUBLIC POWER CORPORATION ( P.P.C.), 104 32 Athens (GR)
(72) Inventor: Theofilou, Nikolaos, Aghia Paraskevi (GR); Chronis, Konstantinos, GR-116 33 Athens (GR); Karsakos, Athanasios, GR-190 03 Markopoulo (GR); Androutsopoulos, George P., Dr., GR-112 55 Athens (GR); Filiou, Panayota, GR-111 44 Athens (GR); Katsaros, Andreas, GR-167 77 Hellinikon (GR); Stamatakis, Konstantinos, Dr., GR-111 46 Athens (GR)
(74) Representative: Papaconstantinou, Helen G.

(57) **Abstract**

The present invention concerns a new gasification method of solid fuels of any quality.
The method is characterized in that the gasification is carried out in an indirectly heated rotary kiln, using as the gasification agent the steam produced from drying of the solid fuel itself, which is taking place inside the gasification chamber and -if necessary- additional steam from an outside source. The maximum gasification temperatures may range from 650-1000°C, and the operating pressure inside the kiln is slightly lower than the ambient.
The method is capable of gasifying solid fuels of any quality with no limitations regarding the moisture content or the particle size of the fuel, and regardless of whether it can be ignited and burnt as fed.
The method is especially suitable for the gasification of low quality coals, like for example the Greek coal, that cannot be gasified without pre-treatment using the classical industrial gasification methods, because of its very low content of combustible matter and its high moisture and ash contents.

## Description

The method concerns the production of a fuel gas mixture from the gasification of solid fuels.

Gasification of solid fuels is a method of converting them to (gaseous and, to a lesser extent, liquid) fuel products, that can be used either as "clean" fuels (achieving low pollutant emission levels and increased energy efficiency) or as feed-stock, primarily to the chemical industry (synthesis gas).
In order to achieve the gasification of solid fuels, heating them at high temperatures in the 900-1600°C range is required, in the presence of a suitable gaseous gasification agent (in most cases steam or -more rarely- carbon dioxide or hydrogen), the pressure being either ambient or elevated up to several decades atmospheres. Depending on the way of heating, gasification methods can be classified as:
1) **Autothermal,** in which part of the solid or other fuel is burnt inside the gasification chamber producing the heat required for the gasification of the rest of solid fuel. In order to achieve the aforementioned combustion, oxygen or air in a mixture with steam is fed into the gasification chamber.
2) **Allothermal,** in which heating of the gasification chamber is carried out indirectly, by burning the solid or other fuel in a separate chamber, so that the flue gases are not directly mixed with the product gas. Heat is exchanged between the combustion and the gasification chambers through metallic walls (e.g. heat exchanger).
Today's industrially applied gasification technologies are almost entirely autothermal, using a mixture of steam and oxygen or air as the gasification agent
A major disadvantage of the autothermal methods is the mixing of the flue gases produced from the combustion of part of the solid fuel with the gas produced from the gasification of the rest of it, resulting in the dilution of the fuel product gas with the nitrogen of the air used, with the following consequences:
- Reduction of the heating value of the fuel product gas.
- Reduction of the gasifier's thermal efficiency.
- Increased NOₓ emissions from the end use of the product gas.
- Higher capital cost of the gasifier and gas-cleaning unit, due to handling of the inert nitrogen gas.
The problem is partially solved by using oxygen instead of air for the combustion of the solid fuel, -the cost (both the capital and operational) of the oxygen plant being very high- or/and by methanation (enrichment of the gas in methane).
In addition to the above, all autothermal methods impose especially strict specifications regarding the properties of the solid fuel they can accept (particle size and particle size distribution, analysis -mainly regarding the moisture and ash contents, physical properties -grindability). Thus, both their applicability range is considerably limited, and the production cost is increased due to the cost of pre-treatment (drying, size classification, grinding or briquetting -depending on the case, enrichment), and/or the cost of the rejected solid fuel, for which, in most cases, some other way of using must be found.

The present invention concerns a new, allotherimc gasification method of solid fuels of any quality, which consists of a rotary kiln, inside which drying or/and pyrolysis or/and gasification of the solid fuel is successively taking place, using the steam produced from drying of the solid fuel within the gasifier, as well as additional steam from an outside source, in the case the aforementioned amount of steam is not enough, as the gasification agent. The interior of the rotary kiln is properly sealed so that leakage of air into the kiln as well as leakage of the product gas from the interior of the kiln to the atmosphere is impossible.
The rotary kiln is indirectly heated ("allothermically") by burning either the solid fuel or part of the produced gaseous fuel or any other fuel in a separate chamber and using the hot flue gases for heating the solid fuel gasified and/or the gasification agent through a suitable heat exchanger and/or through the rotary kiln shell itself. Feeding of the solid fuel may be done by means of any of the existing solids handling and feeding systems, provided that it secures the sealing of the chamber into which the solid fuel is fed -and in which gasification takes place-from the environs.
The product gas may be treated for cleaning by means of any of the already in use or under development gas cleaning methods from the entrained solid particles and sulphur compounds (Hydrogen Sulphide).
Finally, the product gas may be used either as a gas turbine or combined cycle fuel for the purpose of power generation, or as industrial-use fuel gas or, finally as feed stock to the chemical industry (synthesis gas).

The present gasification method has considerable advantages compared to all of the autothermal gasification methods in use, in these points:
- It can accept without any pre-treatment solid fuels of any quality and heating value, even solid fuels with very high ash and moisture contents that could not be ignited ad burned as-received in an autothermal gasification system just because of their very low content of combustibles and, consequently, their very low heating value.
- It uses the steam that comes from the inherent moisture content of the solid fuel and is evaporated during its drying within the gasifier as the gasification agent, regardless of the value of the moisture content. Therefore, neither a separate drying plant is required, reducing, thus, the solid fuel pre-treatment cost, nor a steam plant, utilising in the best possible way the energy spent for the evaporation of the inherent moisture. The system is capable, however to accept steam from any other source (steam generator) in case the inherent moisture contained in the solid fuel is not sufficient for its gasification.
- It can accept solid fuel of any particle size, the maximum particle size depending only on the capability of the feed system used and with no limits towards the side of minimum particle size. Therefore, with this gasification method, no mechanical pre-treatment of the solid fuel is required regarding particle size classification or grinding, except of crushing of the very big particles of the fuel so that they do not exceed the maximum particle size that the employed feeding system can handle.
- Air can be used for the combustion of any fuel is used for heating the rotary kiln, without any negative consequences on the quality of the gaseous fuel produced, since the latter neither is mixed nor contacts the flue gases.
- Due to the fact that the gaseous fuel mixture produced is not diluted by the flue gases produced from the combustion of any fuel is used for providing the required for the gasification heat, the volume of gas to be treated by any entrained-particles and sulphur-compounds cleaning system is minimized and, consequently, the cost of cleaning as well.
- Finally, the gasification plant can be used unmodified not only for gasification, that takes place at high temperatures (above 600-750°C) and in the presence of steam, but for pyrolysis as well, which takes place in the absence of steam at any temperature above 400°C.

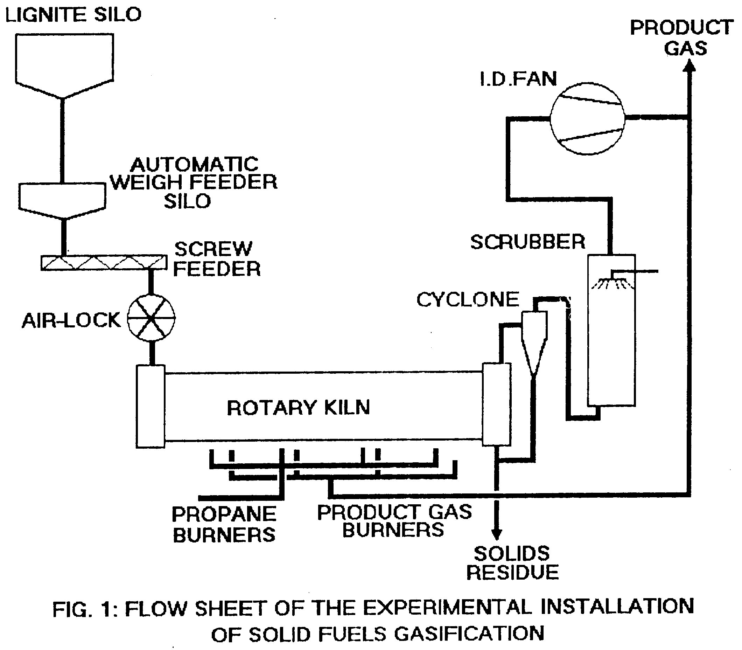

Figure 1 shows the flow sheet of the experimental installation that was used for the development of the method. This Figure shows the main parts of a gasification plant using the new method, the core of which is the indirectly heated rotary kiln.

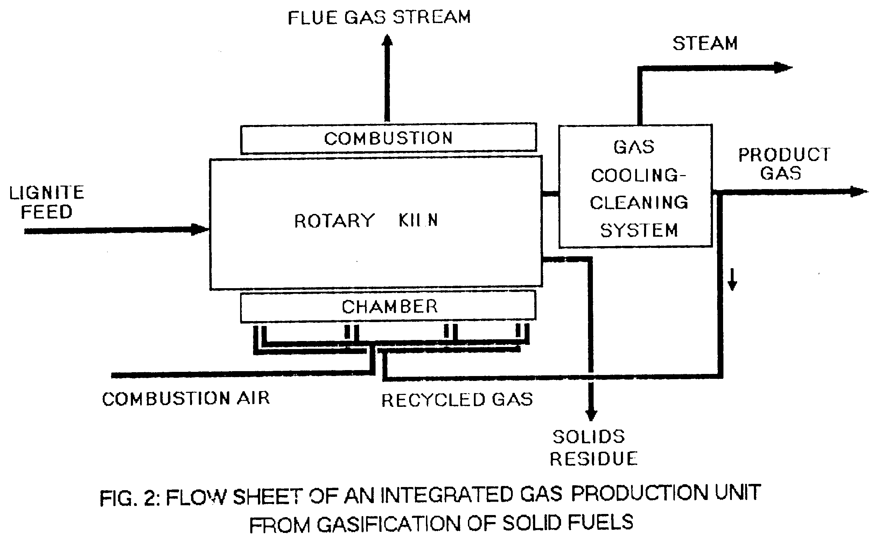

Figure 2 shows as an example, without being a limitation thereof, one of the many possibilities of developing a flow sheet of an integrated, sell-supporting unit of gaseous fuel production from gasification of solid fuels, using the new method. Into this unit only the solid fuel is fed, which is gasified in the rotary kiln, part of the fuel gas produced is used -after cleaning up and recycling- for the indirect heating of the rotary kiln, whereas the rest of the gas is available for exploitation.

Referring to Fig. 1, the solid fuel is fed at the entrance of the rotary kiln by means of a screw feeder and the use of a rotary air-lock to avoid leakage to and from the interior of the kiln. The solid fuel has not received any pre-treatment other than that dictated by the limitations, imposed by the feeding system used upon the maximum particle size of the solid fuel, that it can handle. It is pointed out that this limitation is not imposed by the gasification method, which is capable of handling and gasifying the solid fuel regardless of its particle size.
The fuel may or may not have been pre-dried, depending on the desired result: in the first case mainly pyrolysis of the fuel and, perhaps, gasification with steam from any residual moisture of the pre-dried fuel shall take place, depending on the maximum operating temperature of the kiln as well, whereas in the latter case, and, provided that the temperature is sufficiently high mainly gasification of the solid fuel shall be carried out.
The rotary kiln is rotated at a low speed and is heated from outside by means of a gaseous fuel flame, so that the maximum temperature inside the rotary kiln is in the 650-1000°C range. While heated, the solid fuel is initially dried passing through the first part of the rotary kiln. The steam produced from drying reacts with the already dry solid fuel in the second and third part of the kiln. In the part of the kiln, where the temperature is less than or about 650°C mainly pyrolysis is taking place, i.e. cracking of the macromolecular, rich in elemental carbon hydrocarbons of the solid fuel, whereas in the part of the rotary kiln, in which the temperature is higher than 650-700°C the gasification reaction is performed:

C + H₂O ====> CO + H₂

A number of parallel and competitive reactions is also taking place both in the gaseous and between the gaseous and the solid phases, reactions, that can be summarized as follows:

CO + H₂O ====> CO₂ + H₂

C + CO₂ ====> 2 CO

C + H₂ ====> CH₄

The produced gaseous fuel mixture consists, therefore, mainly of hydrogen, carbon monoxide, carbon dioxide, methane and hydrogen sulphide, the latter produced from the reaction of any sulphur contained in the solid fuel. The product gas is sucked, after leaving the kiln, by an induced draft fan, by means of which the pressure inside the rotary kiln is kept at levels slightly lower than the ambient (preferably 3-10 mm water gage vacuum) so that, in combination with suitable sealing systems at both ends of the rotary kiln any leaks, both of air into the kiln and -more importantly- of product gas to the air, are prevented.
The product gas cleaning system consists of a cyclone and filter-bags for the removal of the entrained particles, and a scrubber for both the removal of any leftovers of entrained particles and the condensation, due to the gas cooling achieved, of any liquid by-products of the reaction (oils, phenols tars).

The system was tested with Greek lignites both from the Megalopolis and the Ptolemais areas. Those lignites are of especially low quality, since they have very high moisture and ash contents and a very low heating value. The system was operated at maximum gasification temperature from 650 to 1000°C, kiln rotation speed from 1 to 5,5 r.p.m., and lignite feed rates from 30 to 70 Kilograms per hour. The inherent moisture content of lignite, to a maximum percentage of 60% on an as-received from the mine basis, was used for the gasification, whereas pyrolysis experiments with pre-dried lignite (and, therefore, a very low moisture content, which ranged up to 3% on an as-fed basis) were carried out as well.

The product gas in all cases was in the limits between low and medium heating value, since its thermal content ranged from 10,3 to 17,2 MJ/Nm³.

Its typical composition was as follows:

| | | |
|---|---|---|
| Maximum Operating temperature: | >900°C | 650°C |

| | | | |
|---|---|---|---|
| Hydrogen | %v/v: | 35,0 - 46,0 | 38,0 - 45,6 |
| Carbon Monoxide | %v/v: | 24,0 - 47,0 | 8,9 - 12,8 |
| Methane | v/v: | 7,5 - 11,0 | 11,2 - 30,8 |
| Carbon Dioxide | %v/v: | 5,6 - 29,0 | 15,4 - 31,9 |
| Hydrogen Sulphide | %v/v: | 0,0 - 0,8 | 0,0 - 0,8 |

The quality of the gas was comparable to that of the gas produced in high-pressure gasifiers by feeding coals with a thermal content much higher than that of the lignite.
The corresponding conversions for the net part of the lignite (i.e. the combustible part of the lignite, that remains after removal of the moisture and the ash) ranged between 90 and 95% under gasification conditions (Reaction temperature >900°C, lignite fed with full moisture content 55-60%), but they were much lower under pyrolysis conditions (temperatures in the 650°C region and dry lignite fed).
The conversions stated above are quite comparable to those given in the literature for the classic autothermal gasifiers and, moreover, they are superior to those, since they correspond to conversion of the solid fuel due to gasification only, whereas, in the classic, autothermal gasifiers, the conversions given correspond to gasification and combustion of coal.

Referring to Fig. 2, which consists a proposal for a gasification unit, that uses the new method, without being any limitation thereof, we are pointing out the considerable number of possibilities offered for the way of heating the rotary-kiln gasifier. Although in Fig.2 heating is shown to be achieved by burning part of the product gas and through the shell of the rotary kiln, it could be more efficiently achieved by burning not only the product gas but the solids residue as well, which still has a considerable heat content, or the solid fuel itself, and by passing the flue gases either through a heat exchanger inside the kiln or through a heat exchanger superheating the gasification agent (steam).

## Claims

1. Method of production of a fuel gas mixture from the Gasification of Solid Fuels characterized in that the gasification is carried out inside an indirectly heated rotary kiln, in that the steam produced either from drying the solid fuel itself, which is taking place inside the gasification chamber itself, or from a separate steam raising installation or both is used as the gasification agent, and in that the gasification chamber is sufficiently sealed so that any mixing of the gas inside the gasifier with the atmospheric air is avoided.

2. Method of production of a fuel gas mixture from the Gasification of Solid Fuels according to Claim 1, additionally characterized in that it operates at maximum temperature inside the gasification chamber preferably in the range 650-1000°C.

3. Method of production of a fuel gas mixture from the Gasification of Solid Fuels according to Claim 1, additionally characterized in that it operates at pressure inside the gasification chamber slightly lower than the ambient, preferably at 3-10 mm water gauge vacuum.

4. Method of production of a fuel gas mixture from the Gasification of Solid Fuels according to Claim 1, additionally characterized in that, combustion either of part of the product fuel gas, after cleaning up and recycling, or of the solid residue of the gasification or of the solid fuel itself, with air is used for heating the rotary kiln.

5. Method of production of a fuel gas mixture from the Gasification of Solid Fuels according to Claim 1, additionally characterized in that the solid fuel fed has any particle size distribution, and of any width, preferably, however, in the 0-30 mm range.

6. Method of production of a fuel gas mixture from the Gasification of Solid Fuels according to Claim 1, additionally characterized in that the solid fuel fed has any moisture content ranging from zero to the maximum moisture content contained in the "as received" solid fuel.
